# EUROPEAN PATENT SPECIFICATION

(11) **EP 2 027 768 B1**
(45) Date of publication and mention of the grant of the patent: **07.04.2010**
(21) Application number: 07114792.0
(22) Date of filing: 22.08.2007
(51) Int. Cl.: A01G 3/053

(54) **Cutting apparatus**
Schneidegerät
Appareil de découpage

(43) Date of publication of application: 25.02.2009
(73) Proprietor: Robert Bosch GmbH, 70442 Stuttgart (DE)
(72) Inventor: Levai, Csaba, H3532, Miskolc (HU); Enekes, Bela, 3627, Dornahaza (HU)

(56) References cited:
- DE-A1- 3 343 772
- US-A- 5 058 276
- DATABASE WPI Week 200572 Derwent Publications Ltd., London, GB; AN 2005-693405 XP002464510 & JP 2005 269972 A (MAKITA CORP) 6 October 2005 (2005-10-06) & JP 2005 269972 A (MAKITA CORP) 6 October 2005 (2005-10-06)

## Description

The present invention relates to cutting apparatus. In particular, it relates to control systems for vegetation cutters especially hedge cutters or trimmers.

Hedgecutters comprise two elongate blades which reciprocate with respect to each other. Either one blade is fixed and the other caused to reciprocate or both blades caused to reciprocate in an equal and opposite manner. The blades are driven by means of a cam element driven by the output shaft of an electric motor or small engine. One such cutter is described in JP2005269972, which hedge cutter also includes a switch allowing the user to reverse the direction of motion of one of the blades.

Hedgecutters frequently suffer in use from a problem of blocked cutting blades when they encounter a twig or branch whose size or density exceeds the capacity of the blades or a wire causing the movable blade or blades to stall. The operator typically removes the power to the blades to remove the pressure of the moving blade on the branch and then attempts to remove the branch by pulling the branch. This can give rise to substantial safety considerations as the user places their fingers near to the blades. Similar problems are presented with other cutting tools.

In our earlier application EP07104129.7, filed on 14 March 2007, we describe a cutting apparatus such as a hedgecutter or trimmer having at least one driven blade movable between two predefined points of maximum travel, the apparatus further comprising a prime mover, suitably an electric motor, adapted to cause movement of the said at least one movable blade between said points of maximum travel. The cutting apparatus is characterised in that it is further provided with a control means, suitably in the form of a control circuit, which causes a change of direction in the movement of the at least one movable blade at a point intermediate the points of maximum travel in response to an event sensed by the control means.

Suitably, the change of direction is achieved by a change in the direction of motor rotation.

In one embodiment, the event is an increase in cutting load. Suitably the control circuit includes a current sensing circuit such that, when the current drawn by the motor exceeds a predetermined level, the control circuit reverses the direction of rotation of the motor. Alternatively, the control circuit includes a speed sensor, adapted to sense when the speed of the driven blade falls below a predetermined level.

In an alternative embodiment, the event is removal of power to the driven blade. Suitably, the control circuit is adapted to cause rotation of the motor sequentially in a first direction upon a first application of electrical power to the motor and in a second direction upon a subsequent application of electrical power to the motor.

In a further embodiment the control circuit is adapted to operate the motor in the reverse direction for a predetermined period whereupon the circuit then causes operation of the motor in the normal direction. Suitably, the predetermined period is less than 1 second, more suitably less than half a second, even more suitably from 200 ms to 400 ms.

However, it has been recognised that high energy impacts occur to the moving components of the tool when a stall or blocking condition occurs. For example, the sudden stopping of the mechanism transfers large forces to the drive mechanism, such as the teeth of pinions, drive gears or cogs or to the motor shaft. This can lead to fracture of the components. The present invention seeks to address this problem.

Accordingly, in its broadest sense the present invention develops the invention described in our earlier application by providing that the control means additionally applies a decreased operating speed to the at least one movable blade for a predefined period upon the or each change of direction in the movement of the at least one movable blade in response to the event sensed by the control means. Reducing the speed of the at least one movable blade has the effect of reducing impact forces on the mechanical components of the apparatus if the blocking condition remains.

That is to say, the present invention provides a cutting apparatus having at least one driven blade movable between two predefined points of maximum travel, the apparatus further comprising a prime mover adapted to cause movement of the said at least one movable blade between said points of maximum travel; characterised in that the cutting apparatus is further provided with a control means which causes a change of direction in the movement of the at least one movable blade at a point intermediate the points of maximum travel in response to an event sensed by the control means and further characterised in that the control means applies a reduced operating speed to the at least one movable blade for a predefined period upon the or each change of direction in the movement of the at least one movable blade in response to the event sensed by the control means.

Preferably, the prime mover is an electric motor. More preferably, the change of direction is achieved by a change in the direction of motor rotation.

Preferably, the speed of the blade is reduced to 30 to 90% of the normal operating speed during the predefined period; more preferably between 40 and 80%, most preferably 50 - 75%

Preferably, the predefined period is from 50 to 1000 milliseconds more preferably from 100 to 500 milliseconds.

Preferably, the control means comprises a control circuit.

In one embodiment, the event is an increase in cutting load. Suitably the control circuit includes a current sensing circuit such that, when the current drawn by the motor exceeds a predetermined level, the control circuit reverses the direction of rotation of the motor. Alternatively, the control circuit includes a speed sensor, adapted to sense when the speed of the driven blade falls below a predetermined level.

In an alternative embodiment, the event is removal of power to the driven blade. Suitably, the control circuit is adapted to cause rotation of the motor sequentially in a first direction upon a first application of electrical power to the motor and in a second direction upon a subsequent application of electrical power to the motor.

In one embodiment the control circuit is adapted to operate the motor in the reverse direction for a predetermined period whereupon the circuit then causes operation of the motor in the normal direction. Suitably, the predetermined period is less than 1 second, more suitably less than half a second, even more suitably from 200 ms to 400 ms.

Even upon reversal of the direction of movement of the at least one movable blade, the cause of the blocking of the blades may not be cleared. Preferably, the control means senses continued blocking as a further event and again changes the direction of movement of the at last one movable blade. Preferably, the control means is adapted to limit the number of changes of direction permitted before power to the motor is removed completely. This may be achieved by the control circuit including a timer circuit, to limit the number of changes of direction within a specified period, such as 10 - 20 reversals within the period of up to 5 seconds or so. Alternatively, the control circuit monitors the speed of the blade and removes power if the speed does not reach a prescribed level typically the normal operating speed within a specified number of reversals, typically 10 to 20. When the limit is reached, the control means disables output power completely from the prime mover unless the apparatus is restarted manually by the user by means of release and reapplication of the normal operating switches.

Preferably, the cutting tool is a portable tool. More preferably, the cutting tool is a vegetation cutter, most preferably a hedge cutter or hedge trimmer.

Preferably, the cutting tool comprises an electric motor powered by means of a rechargeable battery or cell. More preferably, the battery is a lithium ion battery.

The above and other aspects of the present invention will now be described in further detail, by way of example only with reference to the accompanying figures in which:

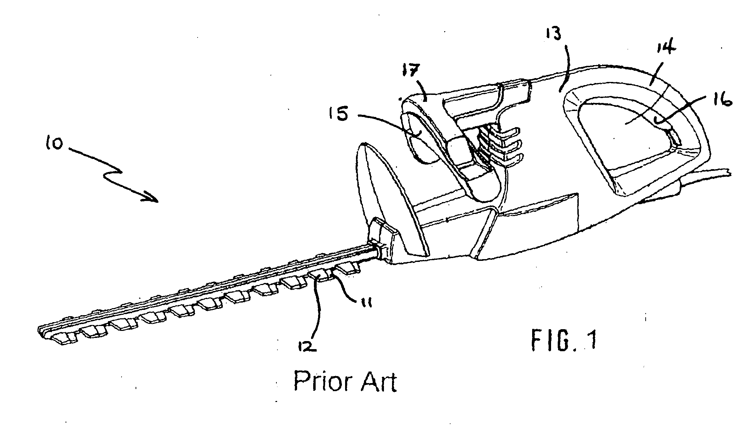

- Figure 1: is a perspective view of typical prior art hedgecutter,
- Figure 2: is a plot showing, schematically, blade speed and impact energy in a cutting apparatus in accordance with our earlier application;
- Figure 3: is a plot showing, schematically, blade speed and impact energy in an embodiment of a cutting apparatus in accordance with the present invention.

A typical cutting apparatus in accordance with the present invention is in the form of a an electric hedgecutter 10 having a bottom blade 11 and upper blade 12 caused to reciprocate simultaneously and in an equal and opposite manner with respect to the housing and hence also to each other by means of an electric motor housed in a housing unit 13. The housing unit 13 includes two grips 14,15, each associated with a switch arrangement 16,17. This switching configuration provides a safety feature requiring both left and right hands of the operator to be in position and actuating their respective switches in order to supply an electric current to the motor. Accordingly, the blades cannot be put into an operating configuration unless both hands are away from the blades.

The motor acts to reciprocate the moving blades 11, 12 in a conventional manner through suitable gearing as required.

In accordance with the present invention, it is possible to drive the reciprocating blade 11 in a reverse direction, compared with its normal cutting direction. It will be appreciated that, in the context of a reciprocating action, the term 'reverse' is used in a relative sense rather than an absolute sense. In use, a hedgecutter frequently suffers from jamming when it encounters a branch or twig whose diameter or density exceeds the capacity of the blades. This jamming or blocking is overcome by a hedgecutter in accordance with the present invention in one of two ways.

In one arrangement, the reciprocating blade is caused to reverse direction for a brief period, sufficient to release the jammed branch, before resuming its conventional direction automatically, without the operator releasing the switches.

In preferred arrangements, the reciprocating blade is caused to reverse its direction and maintain the reversed direction until such time as a further jammed situation is detected, whereupon the direction is reversed again, to the original direction, and so on automatically, without the operator releasing the switches. With this arrangement, upon encountering a jammed or stalled situation, the blade is caused to oscillate back and forth, thereby cutting the branch from both sides and achieving a cut which would not otherwise have been possible with the hedgecutter. Accordingly, the present invention not only provides a solution to the problem of stalled blades due to jamming but also extends the cutting capability of the cutting tool.

As described in our earlier application, where the apparatus has an AC motor with armature and brushes having zero commutator/brush shift, reverse rotation is achieved by reversing the direction of current through the armature by means of a double pole changeover relay or by means of a 4-triac bridge. Relay changeover state can be changed by means of further electronic control circuitry, the precise configuration of which would be readily apparent to the person skilled in the art.

In the case of an AC motor having commutator/brush shift in addition to the electrical switchover, the brushes are mechanically moved, suitably by means of an electromechanical switching arrangement, thereby replicating the commuter/brush shift for the alternative direction of running.

In a DC motor powered vegetation cutter, suitably zero brush shift is incorporated. Reverse action of the motor, and thus reciprocating blade 12, is achieved by reversal of the motor polarity achievable with solid state or electro-mechanical switching.

In a preferred embodiment, the vegetation cutter is battery-powered, more preferably by means of a Li-ion battery unit. Devices using Li-ion batteries typically include an undervoltage protection circuit. This can be adapted to include the control circuit for the reverse drive operation of the present invention, for example, change of motor direction can be readily accomplished by means of a MOSFET bridge. If a brushless DC motor is utilised, the commutation electronics can advantageously be programmed to reverse the motor direction.

The blade reversal event is advantageously triggered by detection of an increase in or high values of cutting load. In preferred embodiments, the control circuit includes a current sensing circuit for this purpose, adapted to initiate motor reverse when the current drawn by the motor exceeds a predetermined level. Typically, this would be the value at stall, although a value less than stall can be used such that the motor is not permitted to reach a stall condition. Accordingly, the battery charge is prolonged as it is not permitted to supply a full stall current, acting as further protection, in addition to the normal protection, to prevent abuse from overcurrent.

Alternatively, blade reversal can be triggered on each occasion electrical power is applied to the motor. When the motor is re-energised in a stall situation, the reciprocating blade(s) therefore reverses to clear the stall.

The vegetation cutter may include gearing adapted to allow a lower ratio geared reverse from that of the forward direction. This acts to aid unblocking of the blades and is particularly suitable for embodiments in which the reversal of blade movement is only temporary.

As will be apparent, we have discussed two solutions to the same technical problem of blade jamming in hedgecutters and other vegetation cutting apparatus. In one arrangement, when a jammed or stalled situation is sensed, the powered cutter blade is automatically put into reverse to free the vegetation causing the stall. In the second arrangement, it is recognized that the user will typically recognize a jammed or stalled situation and will instinctively release some or both switches and so cut power to the motor. This leaves the cutter in the jammed configuration. Accordingly, the blade is put into a reverse direction automatically on re-application of power to the motor.

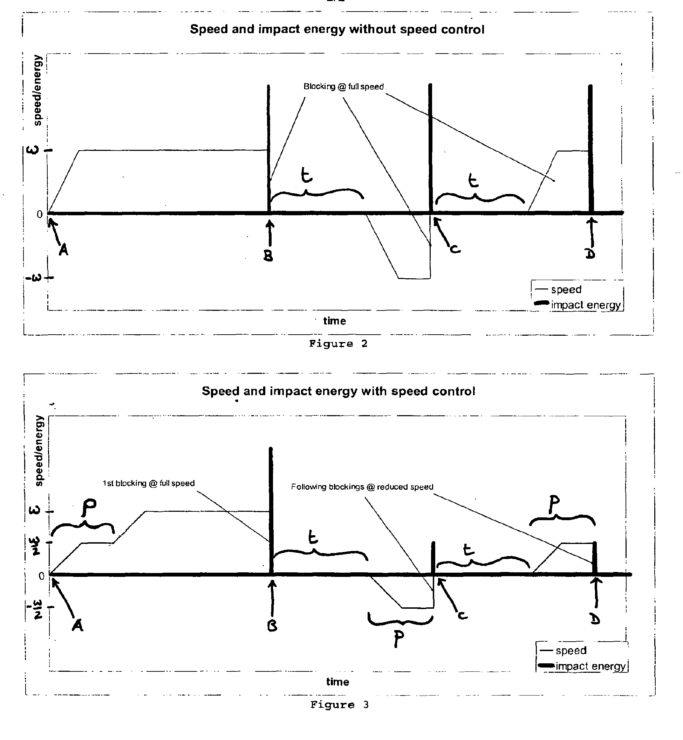

Figure 2 shows a graph schematically representing, by means of a thin line, the speed of rotation of an electric motor in a hedge cutter in accordance with our earlier application with respect to time from start-up (point A) through stall conditions B, C and D. As will be seen, from start-up, the speed of rotation gradually builds up to a working speed w. After a period B, the blades encounter a branch which causes the blades to stall and the speed of the motor falls instantaneously to zero. After a brief pause *t*, the control means causes the motor to re-energise and rotate in a reverse direction, building up rotational speed from zero to a working speed of -w. After a further period, a further stall condition is encountered C, power to the motor is removed and then reversed and then a further stall condition occurs at D. The graph also indicates, by means of thick lines, impact energy levels upon components of the moving mechanical parts of the apparatus, such as reciprocating parts such as the blades, or rotating parts such as the motor rotor and gearing, caused by the sudden arresting of their motion in a stall or blocking condition. As can be seen, at each of the stall conditions B, C and D, the impact energy is substantially constant, causing significant stress on the mechanical parts and risking failure of the apparatus.

Figure 3 shows the same elements in respect of a cutting apparatus in accordance with the present invention. As shown, from a standstill at point A, the speed of rotation of the motor is increased by the control circuit to an initial level of around one half of the normal working speed w and remains at that level for a predetermined period p from start up (point A). Thereafter it increases to the full working speed w. Typically control of the blade speed is achieved by control of the motor supply voltage. Alternatively, direct electronic speed regulation can be used, especially with an electronically-commutated motor with speed control electronic circuitry.

The apparatus encounters a stall condition at B and the impact stresses will be at the same level as before, since the apparatus was operating at full speed. The power to the motor is removed for a brief period *t* as before, before the motor is re-energised in the reversed direction and its speed of rotation controlled again to the initial level of around w/2 again taking a period p. If a stall condition still applies, the impact energy at this lower speed is greatly reduced, as shown by the thick lines.

The delay time p is chosen such that, after a reversal following a stall condition, the blades will reach at least their point of maximum travel at the reduced speed level. Thus, if a blocking situation remains between the blades, it will be encountered by the movable blade at a reduced speed. Suitably, period p is up to 1 second in duration, preferably between 100ms and 500ms, which period will not generally be noticed by a user of the apparatus.

The impact energy is proportional to the square of the rotational speed and so a halving of the rotational speed equates to a lowering of the impact energy to just 25% of that shown in Figure 2. However, this also means that relatively small reductions in blade speed can have a relatively large decrease in stresses. Accordingly, reductions of blade speed are preferably in the range of 10 to 70% (equating to 30 to 90% of normal speed), more preferably in the range of 20 to 60%. Speed reductions of 25 to 50% are particularly preferred in providing a good balance between maintaining adequate power and reducing stresses.

If there is no other blocking condition during the predefined delay time p, the control means increases the power of the motor back to full normal working speed w. If a further blocking condition is encountered (as shown), the motor is again reversed.

## Claims

1. A cutting apparatus (10) comprising at least one blade (11,12) movable between two predefined points of maximum travel, the apparatus (10) further comprising a prime mover adapted to drive said at least one movable blade (11,12) between said points of maximum travel at a normal operating speed; the cutting apparatus (10) further comprises a control means which causes a change of direction in the movement of the at least one movable blade (11,12) at a point intermediate the points of maximum travel in response to an event sensed by the control means; and **characterised in that** the control means is adapted to apply a reduced operating speed to the at least one movable blade for a predefined period(*p*)upon the or each change of direction in the movement of the at least one movable blade in response to the event sensed by the control means.

2. A cutting apparatus as claimed in Claim 1 wherein period(*p*) is from 50 to 1000 milliseconds, preferably from 100 to 500 milliseconds.

3. A cutting apparatus as claimed in Claim 1 or Claim 2 wherein the control means reduces the speed of the at least one blade to 30 to 90% of the normal operating speed during the predefined period(*p*); preferably 40 to 80%; more preferably 50% to 75%.

4. A cutting apparatus (10) as claimed in any one of Claims 1 to 3 wherein the prime mover is an electric motor.

5. A cutting apparatus (10) as claimed in Claim 4 wherein the change of direction is achieved by a change in the direction of motor rotation.

6. A cutting apparatus (10) as claimed in any one of Claims 1 to 5 wherein the control means comprises a control circuit.

7. A cutting apparatus (10) as claimed in Claim 6 wherein the event is an increase in cutting load.

8. A cutting apparatus (10) as claimed in Claim 7 wherein the control circuit includes a current sensing circuit such that, when the current drawn by the motor exceeds a predetermined level, the control circuit reverses the direction of rotation of the motor.

9. A cutting apparatus (10) as claimed in Claim 7 wherein control means includes a speed sensor, adapted to sense when the speed of the driven blade falls below a predetermined level.

10. A cutting apparatus (10) as claimed in Claim 6 wherein the event is removal of power to the driven blade.

11. A cutting apparatus (10) as claimed in Claim 10 wherein the control circuit is adapted to cause rotation of the motor sequentially in a first direction upon a first application of electrical power to the motor and in a second direction upon a subsequent application of electrical power to the motor.

12. A cutting apparatus (10) as claimed in any preceding claim in the form of a vegetation cutter, preferably a hedge cutter or hedge trimmer.

## Patentansprüche

1. Schneidgerät (10), das mindestens ein Messer (11, 12) umfasst, das zwischen zwei vordefinierten Maximalhubpunkten beweglich ist, wobei das Gerät (10) weiterhin ein Antriebsaggregat umfasst, das zum Antrieb mindestens eines beweglichen Messers (11, 12) zwischen den Maximalhubpunkten mit einer normalen Betriebsgeschwindigkeit ausgeführt ist; wobei das Schneidgerät (10) weiterhin ein Steuermittel umfasst, das eine Richtungsänderung der Bewegung des mindestens einen beweglichen Messers (11, 12) an einem Punkt zwischen den Maximalhubpunkten als Reaktion auf ein von dem Steuermittel erfasstes Ereignis bewirkt; **dadurch gekennzeichnet, dass** das Steuermittel dazu ausgeführt ist, das mindestens eine bewegliche Messer für eine vordefinierte Zeitdauer (p) bei der oder jeder Richtungsänderung der Bewegung des mindestens einen beweglichen Messers als Reaktion auf das von dem Steuermittel erfasste Ereignis mit einer verringerten Betriebsgeschwindigkeit zu beaufschlagen.

2. Schneidgerät nach Anspruch 1, wobei die Zeitdauer (p) von 50 bis 1000 Millisekunden, vorzugsweise von 100 bis 500 Millisekunden, beträgt.

3. Schneidgerät nach Anspruch 1 oder 2, wobei das Steuermittel die Geschwindigkeit des mindestens einen Messers auf 30 bis 90% der normalen Betriebsgeschwindigkeit während der vordefinierten Zeitdauer (p), vorzugsweise 40 bis 80%, besonders bevorzugt 50% bis 75%, verringert.

4. Schneidgerät (10) nach einem der Ansprüche 1 bis 3, wobei das Antriebsaggregat ein Elektromotor ist.

5. Schneidgerät (10) nach Anspruch 4, wobei die Richtungsänderung durch eine Richtungsänderung der Motordrehung erreicht wird.

6. Schneidgerät (10) nach einem der Ansprüche 1 bis 5, wobei das Steuermittel eine Steuerschaltung umfasst.

7. Schneidgerät (10) nach Anspruch 6, wobei das Ereignis eine Zunahme der Schneidlast ist.

8. Schneidgerät (10) nach Anspruch 7, wobei die Steuerschaltung eine Strommessschaltung enthält, so dass, wenn der von dem Motor abgezogene Strom eine vorbestimmte Höhe überschreitet, die Steuerschaltung die Drehrichtung des Motors umkehrt.

9. Schneidgerät (10) nach Anspruch 7, wobei das Steuermittel einen Geschwindigkeitssensor enthält, der dazu ausgeführt ist zu erfassen, wann die Geschwindigkeit des angetriebenen Messers unter eine vorbestimmte Höhe fällt.

10. Schneidgerät (10) nach Anspruch 6, wobei das Ereignis die Unterbrechung der Energiezufuhr zu dem angetriebenen Messer ist.

11. Schneidgerät (10) nach Anspruch 10, wobei die Steuerschaltung dazu ausgeführt ist, eine Drehung des Motors sequentiell in einer ersten Richtung bei einer ersten Zuführung von elektrischer Energie zu dem Motor und in einer zweiten Richtung bei einer anschließenden Zuführung von elektrischer Energie zu dem Motor zu bewirken.

12. Schneidgerät (10) nach einem vorhergehenden Anspruch in Form einer Pflanzenschneidvorrichtung, vorzugsweise eines Heckenschneiders oder einer Heckenschere.

## Revendications

1. Appareil de coupe (10) comprenant au moins une lame (11, 12) déplaçable entre deux points prédéfinis de course maximale, l'appareil (10) comprenant en outre un moteur d'entraînement prévu pour entraîner ladite au moins une lame déplaçable (11, 12) entre lesdits points de course maximale à une vitesse de fonctionnement normale ; l'appareil de coupe (10) comprenant en outre un moyen de commande qui provoque un changement de direction du mouvement de l'au moins une lame déplaçable (11, 12) en un point entre les points de course maximale en réponse à un événement détecté par le moyen de commande ; et **caractérisé en ce que** le moyen de commande est prévu pour appliquer une vitesse de fonctionnement réduite à l'au moins une lame déplaçable pendant une période prédéfinie (p) au moment du ou de chaque changement de direction du mouvement de l'au moins une lame déplaçable en réponse à l'événement détecté par le moyen de commande.

2. Appareil de coupe selon la revendication 1, dans lequel la période (p) est comprise entre 50 et 1000 millisecondes, de préférence entre 100 et 500 millisecondes.

3. Appareil de coupe selon la revendication 1 ou la revendication 2, dans lequel le moyen de commande réduit la vitesse de l'au moins une lame à 30 à 90% de la vitesse de fonctionnement normale au cours de la période prédéfinie (p) ; de préférence à 40 à 80% ; plus préférablement à 50% à 75%.

4. Appareil de coupe (10) selon l'une quelconque des revendications 1 à 3, dans lequel le moteur d'entraînement est un moteur électrique.

5. Appareil de coupe (10) selon la revendication 4, dans lequel le changement de direction est réalisé par un changement de sens de la rotation du moteur.

6. Appareil de coupe (10) selon l'une quelconque des revendications 1 à 5, dans lequel le moyen de commande comprend un circuit de commande.

7. Appareil de coupe (10) selon la revendication 6, dans lequel l'événement est une augmentation de la charge de coupe.

8. Appareil de coupe (10) selon la revendication 7, dans lequel le circuit de commande comporte un circuit de détection de courant de telle sorte que lorsque le courant consommé par le moteur dépasse un niveau prédéterminé, le circuit de commande inverse le sens de rotation du moteur.

9. Appareil de coupe (10) selon la revendication 7, dans lequel le moyen de commande comporte un détecteur de vitesse prévu pour détecter quand la vitesse de la lame entraînée chute en dessous d'un niveau prédéterminé.

10. Appareil de coupe (10) selon la revendication 6, dans lequel l'événement est la coupure de la puissance alimentant la lame entraînée.

11. Appareil de coupe (10) selon la revendication 10, dans lequel le circuit de commande est prévu pour provoquer la rotation du moteur de manière séquentielle dans un premier sens lors d'une première application de puissance électrique au moteur et dans un deuxième sens lors d'une application subséquente de puissance électrique au moteur.

12. Appareil de coupe (10) selon l'une quelconque des revendications précédentes, sous la forme d'un appareil pour couper de la végétation, de préférence un taille-haie ou un coupe-bordure.
